# EUROPEAN PATENT APPLICATION

(11) **EP 4 640 089 A1**
(43) Date of publication of application: **29.10.2025**
(21) Application number: 23905475.2
(22) Date of filing: 31.10.2023
(51) Int. Cl.: A24F 40/40, A24F 40/42, A24F 40/10, A24F 40/50

(54) **ELECTRONIC ATOMIZATION DEVICE**

(30) Priority: 22.12.2022 CN 202223464940 U
(71) Applicant: Shenzhen Geekvape Technology Co., Ltd., Shenzhen, Guangdong 518126 (CN)
(72) Inventor: WAN, Genyun, Shenzhen, Guangdong 518126 (CN); WANG, Liang, Shenzhen, Guangdong 518126 (CN)
(74) Representative: MERH-IP Matias Erny Reichl Hoffmann Patentanwälte PartG mbB
(86) International application number: PCT/CN2023/128334
(87) International publication number: WO 2024/131303

(57) **Abstract**

An electronic atomization device, including an electronic atomizer and a battery assembly, the battery assembly provides power supply for the electronic atomizer, the battery assembly includes a housing, a mounting groove is arranged on the housing, the electronic atomizer is partially arranged in the mounting groove and is electrically connected with the battery assembly, the battery assembly further comprises a microphone cavity, the microphone cavity is arranged in the housing, and a microphone is arranged in the microphone cavity; a microphone air outlet hole is arranged at a groove bottom of the mounting groove, the microphone air outlet hole is in communication with the microphone cavity; the battery assembly further includes an air guiding structure, a through hole is arranged in the air guiding structure, an air in the microphone cavity enters the electronic atomizer through the through hole of the air guiding structure, an end of the through hole adjacent to the microphone is a first opening, and an other end of the through hole is a second opening; the first opening is in communication with the microphone air outlet hole, and the second opening faces a side wall of the mounting groove. Through the above design, avoid the external liquid and condensate is avoided to splash on the microphone gas outlet hole and block the microphone gas outlet hole, and liquid microphone being damped and cannot normally operate can be ensured.

## Description

The present application claims priority to a Chinese patent application with application No. 202223464940.5, filed on December 22, 2022, and entitled "Electronic atomization device", the content of which is incorporated herein by reference.

### TECHNICAL FIELD

The present application relates to the technical field of atomization devices, and more particularly to an electronic atomization device.

### BACKGROUND

At present, the starting mode of most mainstream electronic atomization devices on the market is to control the electronic atomizer to connect the power supply to start the atomization operation by the microphone sensing the change of air pressure. In order to enable the microphone to better sense the change of air pressure, the microphone air outlet hole is generally directly arranged at the groove bottom of the mounting groove of the electronic atomizer.

The external liquid and condensate generated by the electronic atomizer are extremely likely to directly splash into the microphone air outlet hole in the mounting groove during use, which may cause the microphone air outlet hole to be blocked, and even more, the external liquid and the condensate directly enter the microphone cavity through the microphone air outlet hole to cause the microphone to be damaged due to moisture.

### SUMMARY

An objective of the present application is to provide an electronic atomization device, which can effectively prevent external liquid and condensate of the electronic atomizer from blocking the microphone air outlet hole, so as to ensure normal operation of the microphone.

The present application discloses an electronic atomization device, which includes an electronic atomizer and a battery assembly, the battery assembly provides power supply for the electronic atomizer, the battery assembly includes a housing, a mounting groove is arranged on the housing, the electronic atomizer is partially arranged in the mounting groove and is electrically connected with the battery assembly, the battery assembly further comprises a microphone cavity, the microphone cavity is arranged in the housing, and a microphone is arranged in the microphone cavity; a microphone air outlet hole is arranged at a groove bottom of the mounting groove, the microphone air outlet hole is in communication with the microphone cavity; the battery assembly further includes an air guiding structure, a through hole is arranged in the air guiding structure, an air in the microphone cavity enters the electronic atomizer through the through hole of the air guiding structure, an end of the through hole adjacent to the microphone is a first opening, and an other end of the through hole is a second opening; the first opening is in communication with the microphone air outlet hole, and the second opening faces a side wall of the mounting groove.

Optionally, a diameter of the through hole is less than or equal to 0.4mm.

Optionally,a spacing is provided between the second opening and the groove bottom of the mounting groove.

Optionally, the air guiding structure includes a main body portion and a blocking portion, the blocking portion is arranged on a side of the main body portion away from the microphone, and a projection of the blocking portion on the groove bottom of the mounting groove covers a projection of the main body portion on the groove bottom of the mounting groove; and the through hole is located in the main body portion, the first opening is arranged at an end of the main body portion away from the blocking portion, and the second opening is arranged on a side surface of the main body portion and on a side of the main body portion adjacent to the blocking portion.

Optionally, cross-sectional areas of the blocking portion gradually decrease in a direction from an end of the main body portion adjacent to the blocking portion to an end of the main body portion away from the blocking portion.

Optionally, an edge position of the blocking portion away from the main body portion is provided with a notch.

Optionally, the microphone air outlet hole includes a first air outlet hole and a second air outlet hole in communication with each other, the first air outlet hole is located between the microphone and the second air outlet hole, and an inner diameter of the second air outlet hole is larger than an inner diameter of the first air outlet hole; and the air guiding structure is partially arranged in the second air outlet hole, an outer wall of the air guiding structure abuts against an inner wall of the second air outlet hole, and a bottom of the air guiding structure abuts against a top of the first air outlet hole.

Optionally, the groove bottom of the mounting groove is provided with an oil storage groove, the microphone air outlet hole is located at a groove bottom of the oil storage groove, and an end of the microphone air outlet hole away from the microphone protrudes from the groove bottom of the oil storage groove.

Optionally, the battery assembly further includes an electrode post and a circuit board, and the electronic atomizer is electrically connected with the circuit board through the electrode post; and the groove bottom of the mounting groove is further provided with an electrode groove, the electrode post is arranged in the electrode groove, and the electrode groove is not in communication with the oil storage groove.

Optionally, the second opening includes two or more sub-openings, and the sub-openings are arranged at intervals on the side surface of the main body portion.

Compared with the technical scheme that the microphone air outlet hole is arranged at the groove bottom of the mounting groove and the end of the microphone air outlet hole away from the microphone directly faces the groove opening of the mounting groove, the end of the microphone air outlet hole away from the microphone in the present application is changed to directly face the groove wall of the mounting groove through the air guiding structure, the problem that when the electronic atomizer is not mounted, the external liquid enters from the groove opening of the mounting groove and directly splashes on the microphone air outlet hole, causing the microphone air outlet hole to be blocked, is avoided. Moreover, the problem that after the electronic atomizer is mounted, the condensate generated by the electronic atomizer during use dropping on the microphone air outlet hole, causing the microphone air outlet hole to be blocked, causing the microphone cavity to fail to generate air pressure change, and causing the microphone to fail to control the electronic atomization device to start, is avoided. Liquid can also be prevented from directly entering the microphone cavity through the microphone air outlet hole, and the problem that the microphone to be damp and fail to work normally can be avoided.

### BRIEF DESCRIPTION OF THE DRAWINGS

The accompanying drawings included to provide a further understanding of the embodiments of the present application, constitute a part of the specification, illustrate the embodiments of the present application, and serve to explain the principles of the present application together with the text. Obviously, the drawings in the following description merely show some of the embodiments of the present application, and other drawings can be obtained according to these drawings without creative labor for those skilled in the art. In the drawings:
FIG. 1 is a schematic view of an electronic atomization device according to an embodiment of the present application;
FIG. 2 is a cross-sectional schematic view of an electronic atomization device according to an embodiment of the present application;
FIG. 3 is a partial enlarged schematic view of a battery assembly according to an embodiment of the present application;
FIG. 4 is a partial enlarged schematic view of a microphone air outlet hole according to an embodiment of the present application; and
FIG. 5 is a cross-sectional schematic view of an air guiding structure according to an embodiment of the present application.

In the drawings: 10-electronic atomization device; 20-electronic atomizer; 30-battery assembly; 300-housing; 310-mounting groove; 320-microphone cavity; 330-microphone; 340-microphone air outlet hole; 341-first air outlet hole; 342-second air outlet hole; 400-air guiding structure; 410-through hole; 420-first opening; 430-second opening; 431-sub-opening; 440-main body portion; 450-blocking portion; 451-notch; 500-oil storage groove; 600-electrode post; 700-circuit board; and 800-electrode groove.

### DESCRIPTION OF THE EMBODIMENTS

It is to be understood that the terminology used herein is for the purpose of describing particular embodiments only, and is not intended to be limiting of the present application. It is to be understood that the terminology used herein is for the purpose of describing particular embodiments only, which is not intended to be limiting of the present application.

In the description of the present application, the terms "first", "second", etc. are used only for the purpose of description, and are not to be construed as indicating relative importance or implicitly indicating the number of technical features indicated. Therefore, unless otherwise specified, the features defined with "first", "second" can explicitly or implicitly include one or more of the features; "a plurality of" means two or more. The term "comprising" and any variation thereof, means non-exclusive inclusion, and one or more other features, integers, steps, operations, units, components and/or combinations thereof can exist or be added.

In addition, the terms "central", "lateral", "upper", "lower", "left", "right", "vertical", "horizontal", "top", "bottom", "inner", "outer" and the like indicating the orientation or positional relationship are described based on the orientation or relative position relationship shown in the drawings, and are only for the convenience of the simplified description of the present application, and do not indicate that the device or element referred to must have a specific orientation, be constructed and operated in a specific orientation, and therefore cannot be construed as a limitation on the present application.

In addition, unless specifically stated and defined otherwise, the terms "mount", "connected", "connecting" are broadly understood, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present application can be interpreted according to specific conditions.

The present application is described in detail below with reference to the drawings and optional embodiments.

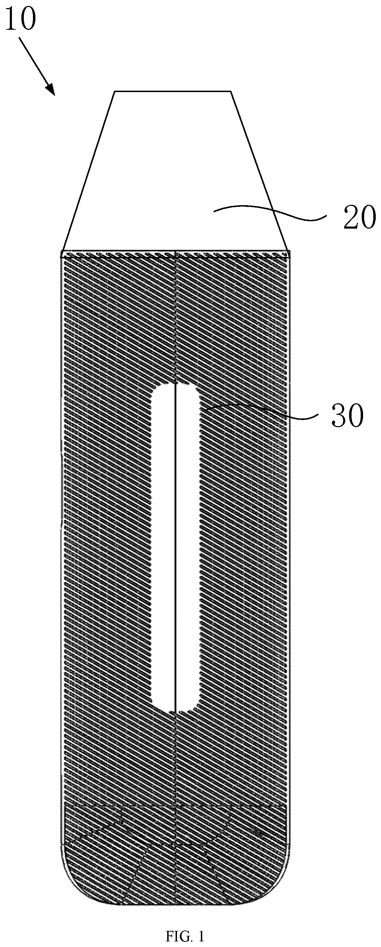

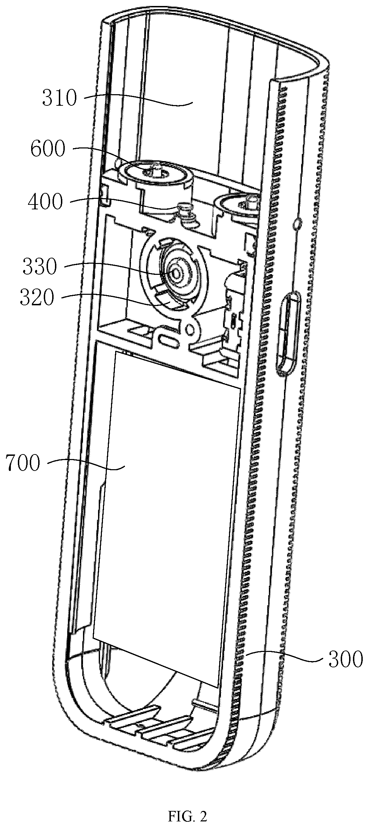

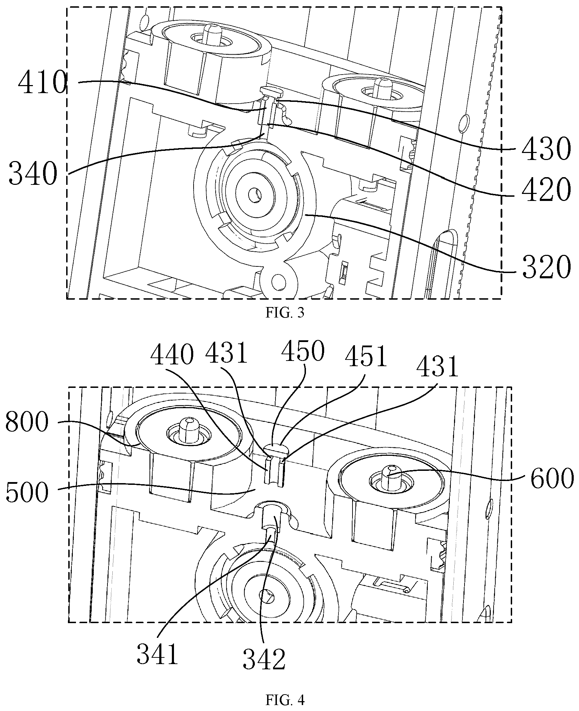

FIG. 1 is a schematic view of an electronic atomization device according to an embodiment of the present application, FIG. 2 is a cross-sectional schematic view of an electronic atomization device according to an embodiment of the present application;, and FIG. 3 is a partial enlarged schematic view of a battery assembly according to an embodiment of the present application. In combination with FIGS. 1-3, the present application discloses an electronic atomization device 10, which includes an electronic atomizer 20 and a battery assembly 30. The battery assembly 30 provides power supply for the electronic atomizer 20, the battery assembly 30 inlcudes a housing 300, the housing 300 is provided with a mounting groove 310, the electronic atomizer 20 is partially arranged in the mounting groove 310 and is electrically connected with the battery assembly 30, and specifically, the battery assembly 30 further includes an electrode post 600 and a circuit board 700, and the electronic atomizer 20 is electrically connected with the circuit board 700 through the electrode post 600.

The battery assembly 30 further includes a microphone cavity 320, the microphone cavity 320 is arranged in the housing 300, and a microphone 330 is arranged in the microphone cavity 320; a microphone air outlet hole 340 is arranged at the groove bottom of the mounting groove 310, and the microphone air outlet hole 340 is in communication with the microphone cavity 320.

The battery assembly 30 further includes an air guiding structure 400, a through hole 410 is arranged in the air guiding structure 400, the air in the microphone cavity 320 enters the electronic atomizer 20 through the through hole 410 of the air guiding structure 400, one end of the through hole 410 adjacent to the microphone 330 is a first opening 420, and the other end is a second opening 430; the first opening 420 is in communication with the microphone air outlet hole 340, and the second opening 430 faces the side wall of the mounting groove 310.

Compared with the technical scheme that the microphone air outlet hole 340 is arranged at the groove bottom of the mounting groove 310 and the end of the microphone air outlet hole 340 away from the microphone 330 directly faces the groove opening of the mounting groove 310, the end of the microphone air outlet hole 340 away from the microphone 330 in the present application is changed to directly face the groove wall of the mounting groove 310 through the air guiding structure 400, the problem that when the electronic atomizer 20 is not mounted, the external liquid enters from the groove opening of the mounting groove 310 and directly splashes on the microphone air outlet hole 340, causing the microphone air outlet hole 340 to be blocked, is avoided. Moreover, the problem that after the electronic atomizer 20 is mounted, the condensate generated by the electronic atomizer 20 during use dropping on the microphone air outlet hole 340, causing the microphone air outlet hole 340 to be blocked, causing the microphone cavity to fail to generate air pressure change, and causing the microphone 330 to fail to control the electronic atomization device 10 to start, is avoided. Liquid can also be prevented from directly entering the microphone cavity through the microphone air outlet hole 340, and the problem that the microphone 330 to be damp and fail to work normally can be avoided.

In order to prevent liquid from entering the microphone cavity through the microphone air outlet hole 340, the diameter of the through hole 410 of the air guiding structure 400 is made small by using the principle of surface tension of liquid droplets. In the present application, the diameter is made to be 0.4mm. According to the liquid surface tension formula: σπd cosθ=ρghπ(d/2)2, when the atmospheric pressure is 1pa, θ is 60°, the constant σ is 0.073N/m, the diameter d is 0.4mm, and h is the depth of the mounting groove, the h is calculated to be 37mm. The depth of the mounting groove 310 of the electronic atomization device 10 is 17.7mm. Therefore, the diameter of the through hole 410 is less than or equal to 0.4mm, which is enough to prevent liquid from entering the air guiding structure 400 by the surface tension of liquid. The problem that liquid enters the microphone cavity through the microphone air outlet hole 340, resulting in the microphone 330 being wet and unable to operate normally, is further eliminated.

As shown in FIG. 3, a spacing is arranged between the second opening 430 and the groove bottom of the mounting groove 310. It can be understood that the end of the through hole 410 away from the microphone 330 protrudes from the bottom plane of the mounting groove 310, so as to prevent the liquid accumulated in the mounting groove 310 from flowing to the end of the through hole 410 away from the microphone 330, blocking the second opening 430 or entering the microphone cavity through the second opening 430, and causing the microphone 330 to be unable to operate normally.

As shown in FIG. 4, in order to further prevent liquid from blocking the microphone air outlet hole 340, an oil storage groove 500 is arranged on the groove bottom of the mounting groove 310. The microphone air outlet hole 340 is located at the groove bottom of the oil storage groove 500, and the end of the microphone air outlet hole 340 away from the microphone 330 protrudes from the groove bottom of the oil storage groove 500. When there is a small amount of liquid in the oil storage groove 500, the liquid cannot enter the microphone cavity 320 through the microphone air outlet hole 340 and the air guiding structure 400.

In addition, an electrode groove 800 is arranged on the groove bottom of the mounting groove 310. The electrode post 600 is arranged in the electrode groove 800. The electrode groove 800 is not in communication with the oil storage groove 500, so as to prevent the liquid from corroding the electrode post 600.

The housing 300 is made of plastic material, and the air guiding structure 400 is made of metal material. The air guiding structure 400 and the microphone air outlet hole 340 are fixedly connected by abutting with each other. Specifically, the microphone air outlet hole 340 includes a first air outlet hole 341 and a second air outlet hole 342 which are in communication with each other. The first air outlet hole 341 is located between the microphone 330 and the second air outlet hole 342. The inner diameter of the second air outlet hole 342 is larger than that of the first air outlet hole 341. The air guiding structure 400 is partially arranged in the second air outlet hole 342. The outer wall of the air guiding structure 400 abuts against the inner wall of the second air outlet hole 342. The bottom of the air guiding structure 400 abuts against the top of the first air outlet hole 341. Therefore, the air guiding structure 400 is stably fixed in the microphone air outlet hole 340 and cannot be separated.

The air guiding structure 400 includes a main body portion 440 and a blocking portion 450. The blocking portion 450 is arranged on the side of the main body portion 440 away from the microphone 330. The projection of the blocking portion 450 on the groove bottom of the mounting groove 310 covers the projection of the main body portion 440 on the groove bottom of the mounting groove 310. The main body portion 440 can be a cylinder. The blocking portion 450 can also be a cylinder. The blocking portion 450 is coaxially arranged with the main body portion 440. The diameter of the blocking portion 450 is larger than that of the main body portion 440.

The through hole 410 is located in the main body portion 440. The first opening 420 is arranged at the end of the main body portion 440 away from the blocking portion 450. The second opening 430 is arranged on the side of the main body portion 440, and is located on the side of the main body portion 440 adjacent to the blocking portion 450. When liquid drops on the air guiding structure 400, the liquid can be blocked by the blocking portion 450 to prevent the liquid from flowing directly to the second opening 430.

The second opening 430 includes two or more sub-openings 431, the two or more sub-openings 431 are arranged at intervals on the side surface of the main body portion 440. The plurality of sub-openings 431 are provided to ensure that even if a single sub-opening 431 is blocked by liquid, it can still ensure that the other sub-openings 431 can release air normally and keep the air guiding structure 400 unobstructed. Preferably, a honeycomb-shaped second opening 430 can be arranged on the side of the main body portion 440.

In addition, the liquid dropped on the blocking portion 450 can be drained by arranging a notch 451 at the edge position of the blocking portion 450 away from the main body portion 440. The accumulation of liquid on the blocking portion 450 is avoided, and the liquid cannot flow through the plurality of sub-openings 431.

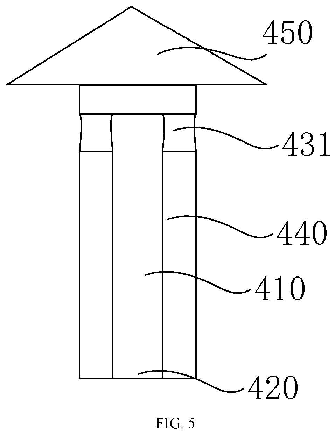

FIG. 5 is a cross-sectional schematic view of an air guiding structure according to an embodiment of the present application. As shown in FIG. 5, the present application further improves the blocking portion 450 to make the liquid on the blocking portion 450 quickly drip into the oil storage groove 500. Specifically, the cross-sectional areas of the blocking portion 450 gradually decrease along the direction from the end adjacent to the main body portion 440 to the end away from the main body portion 440.

It can be understood that the blocking portion 450 is in the shape of a cone, and cooperates with the main body portion 440 to form an umbrella-shaped structure. When liquid drops and condensate drops fall on the blocking portion 450, the liquid can quickly flow along the outer wall of the blocking portion 450 into the oil storage groove 500, so that the liquid cannot stay on the blocking portion 450, and the liquid cannot flow from the blocking portion 450 to the position of the sub-opening 431.

It should be noted that the inventive concept of the present application can form a very large number of embodiments, but the present application file is limited in size and cannot be listed one by one, and therefore, under the premise of no conflict, the above-described embodiments or the technical features can be combined to form new embodiments, and the combination of the embodiments or the technical features will enhance the original technical effect

The above is a further detailed description of the present application in combination with specific optional embodiments, and the specific implementation of the present application cannot be limited to these descriptions. For those skilled in the art to which the present application belongs, several simple deductions or replacements can be made without departing from the concept of the present application, and all should be regarded as belonging to the protection scope of the present application.

## Claims

1. An electronic atomization device, comprising:
an electronic atomizer; and
a battery assembly, configured to supply a power for the electronic atomizer;
wherein the battery assembly comprises a housing, the housing is provided with a mounting groove, the electronic atomizer is partially arranged in the mounting groove and is electrically connected with the battery assembly; **characterized in that** the battery assembly further comprises a microphone cavity arranged in the housing, and a microphone is arranged in the microphone cavity; a microphone air outlet hole is arranged at a groove bottom of the mounting groove, and the microphone air outlet hole is in communication with the microphone cavity; and
wherein the battery assembly further comprises an air guiding structure; a through hole is arranged in the air guiding structure, and an air in the microphone cavity enters the electronic atomizer through the through hole of the air guiding structure, an end of the through hole adjacent to the microphone is a first opening, and an other end of the through hole is a second opening; the first opening is in communication with the microphone air outlet hole, and the second opening faces a side wall of the mounting groove.

2. The electronic atomization device according to claim 1, wherein a diameter of the through hole is less than or equal to 0.4mm.

3. The electronic atomization device according to claim 1, wherein a spacing is provided between the second opening and the groove bottom of the mounting groove.

4. The electronic atomization device according to claim 1, wherein the air guiding structure comprises a main body portion and a blocking portion, the blocking portion is arranged on a side of the main body portion away from the microphone, and a projection of the blocking portion on the groove bottom of the mounting groove covers a projection of the main body portion on the groove bottom of the mounting groove; and
the through hole is located in the main body portion, the first opening is arranged at an end of the main body portion away from the blocking portion, and the second opening is arranged on a side surface of the main body portion and on a side of the main body portion adjacent to the blocking portion.

5. The electronic atomization device according to claim 4, wherein cross-sectional areas of the blocking portion gradually decrease in a direction from an end of the main body portion adjacent to the blocking portion to an end of the main body portion away from the blocking portion.

6. The electronic atomization device according to claim 4, wherein an edge position of the blocking portion away from the main body portion is provided with a notch.

7. The electronic atomization device according to claim 1, wherein the microphone air outlet hole comprises a first air outlet hole and a second air outlet hole in communication with each other, the first air outlet hole is located between the microphone and the second air outlet hole, and an inner diameter of the second air outlet hole is larger than an inner diameter of the first air outlet hole; and
the air guiding structure is partially arranged in the second air outlet hole, an outer wall of the air guiding structure abuts against an inner wall of the second air outlet hole, and a bottom of the air guiding structure abuts against a top of the first air outlet hole.

8. The electronic atomization device according to claim 1, wherein the groove bottom of the mounting groove is provided with an oil storage groove, the microphone air outlet hole is located at a groove bottom of the oil storage groove, and an end of the microphone air outlet hole away from the microphone protrudes from the groove bottom of the oil storage groove.

9. The electronic atomization device according to claim 8, wherein the battery assembly further comprises an electrode post and a circuit board, and the electronic atomizer is electrically connected with the circuit board through the electrode post; and
the groove bottom of the mounting groove is further provided with an electrode groove, the electrode post is arranged in the electrode groove, and the electrode groove is not in communication with the oil storage groove.

10. The electronic atomization device according to claim 4, wherein the second opening comprises two or more sub-openings, and the two or more sub-openings are arranged at intervals on the side surface of the main body portion.
